# EUROPÄISCHE PATENTSCHRIFT

(11) **EP 3 312 302 B1**
(45) Veröffentlichungstag und Bekanntmachung des Hinweises auf die Patenterteilung: **10.07.2019**
(21) Anmeldenummer: 17170573.4
(22) Anmeldetag: 11.05.2017
(51) Int. Cl.: C23C 18/12

(54) **VERFAHREN ZUR HERSTELLUNG EINER GLASSCHICHT AUF EINEM SUBSTRAT**
METHOD FOR PRODUCING A GLASS LAYER ON A SUBSTRATE
PROCÉDÉ DE FABRICATION D'UNE COUCHE DE VERRE SUR UN SUBSTRAT

(30) Priorität: 19.10.2016 EP 16002244
(43) Veröffentlichungstag der Anmeldung: 25.04.2018
(73) Patentinhaber: SEPIES GmbH, 85591 Vaterstetten (DE)
(72) Erfinder: PIESSLINGER-SCHWEIGER, Siegfried, 85591 Vaterstetten (DE); DR. BÖHME, Olaf, 85435 Erding (DE)
(74) Vertreter: Wibbelmann, Jobst

(56) Entgegenhaltungen:
- DE-A1-102008 063 160
- FR-A1- 2 915 205
- GB-A- 2 257 439

## Beschreibung

Die vorliegende Erfindung betrifft ein Verfahren, um Oberflächen von Gegenständen aus unterschiedlichen Materialien wie Metall, Keramik, Beton, Stein oder Holz mit einer dichten, fest haftenden, nicht brennbaren, temperaturbeständigen und harten Schicht aus Glas zu beschichten bzw. zu versiegeln. Die erfindungsgemäß erhaltenen Oberflächen sind schmutzabweisend, elektrisch isolierend, nicht brennbar, leicht zu reinigen und beständig gegen Altern, Korrosion und Chemikalien. Die Glasschichten können sowohl farblos transparent als auch in jeder beliebigen Farbe und Farbintensität gestaltet werden. Das Verfahren ist jederzeit, auch vor Ort und an fest eingebauten Objekten, anwendbar. Die Anwendung ist weitgehend unabhängig von Form und Größe der zu versiegelnden Bauteile.

### Hintergrund der Erfindung

### Emaillieren

Um Metalloberflächen, meist auf Stahl oder Kupferlegierungen, mit anorganischen, gegen hohe Temperaturen und gegen Chemikalien beständigen, schützenden Glasschichten zu versehen, bedient man sich traditionell der Technik des Emaillierens. Dazu werden Metalloberflächen nach einer geeigneten Vorbehandlung zur Erzielung einer fest haftenden Beschichtung mit einer Fritte belegt, die im Wesentlichen aus fein gemahlenem Glas, Chemikalien, Farbpigmenten und Bindemitteln besteht. Anschließend werden die mit der Fritte belegten Werkstücke in einen Ofen eingebracht und über den Schmelzpunkt des Glases erhitzt. Dadurch bildet sich auf den Metalloberflächen ein fest haftender, schützender Überzug aus Glas, das Email.

Emaillieren erfordert in der Regel Temperaturen im Bereich von 700°C bis 1000°C, die über einen längeren Zeitraum einwirken. Dies erfordert als Basis Werkstoffe, die diese Temperaturen über einen längeren Zeitraum ertragen können, ohne Form und Eigenschaften zu verändern.

Emailschichten sind hart und spröde. Sie neigen bei Schlägen und Verformungen zum Abplatzen. Beschädigte Emailschichten lassen sich, wenn überhaupt, nur mit großem Aufwand reparieren.

### Glasieren

Um Oberflächen aus Keramik oder Porzellan wasserdicht, leicht zu reinigen und attraktiv zu gestalten, werden diese traditionell glasiert. Dazu werden ähnlich wie beim Emaillieren die zu glasierenden Oberflächen mit einer Fritte aus feingemahlenem Glas und mineralischen Pigmenten belegt. Anschließend werden die Teile in einem Ofen bis über den Schmelzpunkt des Glases erhitzt. Es entsteht eine glatte, harte, wasserdichte und gegen Chemikalien und hohe Temperaturen beständige, meist farbig gestaltete Oberfläche. Beschädigte Glasuren sind, wenn überhaupt, nur mit hohem Aufwand zu reparieren.

### Sol-Gel-Beschichtunaen

Sol-Gel-Beschichtungen werden meist auf Metalloberflächen aufgebracht. Sie weisen eine glaskeramische Struktur mit erheblichen organischen Bestandteilen auf.

Sol-Gel-Beschichtungen bestehen in der Regel aus zwei Reaktionskomponenten, die kurz vor der Verarbeitung in einem festen Verhältnis zueinander gemischt werden. Dieser Mischung wird zuletzt eine Verdünnung, meist ein Alkohol, zugemischt. Durch die Verdünnung werden die Konzentration der Reaktionsmischung und die Viskosität des fertigen Ansatzes eingestellt. Das Sol-Gel ist ein Kieselsol, basierend auf hydrolysierbaren Siloxanen, die in Lösemitteln gelöst werden, wobei das Kieselsol zudem ein oder mehrere weitere Sol-bildende Elemente enthalten kann, bevorzugt aus der Gruppe bestehend aus AI, Ti, Zr, Mg, Ca und Zn, wobei diese Elemente die Si-Atome in den kolloidalen Strukturen ersetzen. Bevorzugte Sol-Gel-Beschichtungen / Sol-Gel-Lacke und deren Anwendung werden in EP 2145980 beschrieben, auf die hier insbesondere Bezug genommen wird.

Die Ausgangsverbindungen zur Bildung der Sole und schließlich des Sol-Gel-Lacks sind hydrolysierbare Siloxane der Formel SiR₄, wobei die 4 Reste 2-4 hydrolysierbare Reste OR' und 0-2 nicht hydrolysierbare Reste R" umfassen.

Die hydrolysierbaren Reste OR' sind Hydroxy-, Alkoxy- und/oder Cycloalkoxyreste. Geeignete Beispiele dafür umfassen unter anderen bevorzugt Ethoxy-, n-Propoxy- und Isopropoxyreste. Die hydrolysierbaren Reste OR' können gleich oder verschieden voneinander sein.

Die nicht-hydrolysierbaren Reste R", so sie vorhanden sind, sind Alkyl- und/oder Cycloalkylreste. Geeignete Beispiele umfassen neben anderen bevorzugt Methyl, Ethyl-,n-Propyl- und Isopropylreste. Die nicht hydrolysierbaren Reste R" können ebenfalls gleich oder verschieden voneinander sein.

Die Reste R' oder R' sind im weitesten Sinne als aliphatische Kohlenwasserstoffe anzusehen (linear, verzweigt oder cyclisch, mit 1 bis 8 Kohlenstoffatomen).

Im Sol sind die Ausgangsverbindungen zum Teil zu den entsprechenden Hydroxyverbindngen (etwa Othokieselsäure, Trihydroxyalkylsilan,usw.) hydrolysiert, was durch die Zugabe eines Katalysators, etwa von Säure, begünstigt werden kann. Auf Grund der hohen Neigung zur Kondensation dieser Hydroxyverbindungen können diese nun unter Abspaltung von Wasser zu kleineren Siloxannetzwerken kondensieren. In dem Sol liegen bereits kolloidale Partikel vor, die Siloxan-Bindungen enthalten. Siloxan-Bindungen sind Bindungen der Form ≡Si-O-Si≡, wobei "≡" drei voneinander unabhängige beliebige Bindungen mit anderen Elementen, insbesondere mit OH, OR' und R", symbolisiert, wodurch eine dreidimensionale vernetzte Struktur in den kolloidalen Partikeln entsteht.

Das Auftragen des Sol-Gel-Lacks kann dabei auf jede beliebige Art und Weise erfolgen, etwa durch Aufsprühen, Eintauchen, Fluten, oder Aufstreichen. Vorzugsweise erfolgt es jedoch durch Aufsprühen, was eine genaue Kontrolle der pro Flächeneinheit aufgebrachten Menge ermöglicht.

Dabei kann die Menge nach Bedarf eingestellt werden. In der Praxis weisen Sol-Gel-Schichten einen Dicke von etwa 0,5 µm bis 8,0 µm auf, bevorzugt eine Dicke von 1,0 µm bis 5,0 µm, um einerseits eine geschlossene Bedeckung der Oberfläche sicherzustellen und andererseits noch eine stabile Schicht ohne Risse und Ablösung zu erzeugen.

Daraufhin lässt man das aufgetragene Sol zu einem Gel reagieren. Diese Reaktion überführt das flüssige Sol in eine feste Gelschicht, in der sich die kolloidalen Partikel des Sols durch weitere Hydrolyse und Kondensation miteinander und mit noch nicht hydrolysierten und kondensierten Ausgangsverbindungen vernetzen. Dies kann beispielsweise durch Verdunsten des alkoholischen Lösemittels beim Trocknen geschehen.

Üblicherweise wird ein Sol-Gel-Lack auf die zu beschichtenden Oberflächen durch Spritzen, Tauchen oder Streichen aufgebracht. Im Anschluss daran wird der Lack getrocknet. Dabei verdunstet die Verdünnung bzw. das Lösemittel und es bildet sich ein festes Gel aus einem Netzwerk aus Siliziumdioxid und OH-Gruppen.

Anschließend werden die Oberflächen in einem Ofen bei Temperaturen zwischen 200°C und 400°C für die Dauer von 20 bis 60 Minuten eingebrannt und dabei auch die Bauteile auf dieselbe Temperatur erhitzt. Die dabei gebildeten Schichten weisen schon eine glaskeramische Struktur auf, die im Wesentlichen aus einem Netzwerk von Siliziumdioxid und organischen, funktionellen Gruppen besteht. Diese Gruppen bestimmen die typischen Eigenschaften von so erhaltenen Sol-Gel-Schichten, wie beispielsweise die Hydrophobizität. Solche Schichten sind glatt und oftmals porös. Die Härte wird deutlich durch die Einbrenntemperatur bestimmt und liegt ausgedrückt als Ritzhärte regelmäßig in einem Bereich von 400g bis 800g.

Derartige Sol-Gel-Schichten können eigentlich nur auf solchen metallischen Werkstücken aufgebracht werden, die bei den üblichen hohen Temperaturen beim Einbrennen keinerlei Schaden nehmen. Nach dem Auftrag der Sol-Gel-Schichten können gegebenenfalls beschädigte Stellen nämlich kaum repariert werden. In einem solchen Fall müsste man beispielsweise eine komplette Entschichtung vornehmen und das Bauteil dann erneut beschichten.

### Stand der Technik

Die GB 2 257 439 A beschreibt ein Verfahren zur Herstellung einer Glasschicht auf einem Substrat, wobei es sich im Wesentlichen um einen Zahn handeln soll, der versiegelt werden soll.

Die DE 10 2008 063160 A1 betrifft ein Verfahren zur Herstellung einer Schutzschicht aus einer Grundschicht und/oder einer Deckschicht auf einem Substrat. Die Beschichtungszusammensetzungen für diese Schutzschicht werden nacheinander aufgebracht und jeweils insbesondere thermisch verdichtet.

Die FR 2 915 205 A1 offenbart eine Anti-Haftbeschichtung für Küchenartikel. Dabei wird eine Sol-Gel-Zusammensetzung mit einer bestimmten Dicke auf einem metallischen Gegenstand aufgebracht und dieser zunächst getrocknet. Im Anschluss daran wird die Beschichtung in mehreren Zyklen, die über 18 Minuten andauern, bei 280°C erwärmt (Beispiel 15).

### Ausführliche Beschreibung der Erfindung

Das Ziel der Erfindung ist ein Verfahren, das es ermöglicht auf die Oberflächen von Gegenständen aus unterschiedlichen Werkstoffen eine porenfreie, dichte und fest haftende Glasschicht aufzubringen, welche die Oberflächen zuverlässig vor Umwelteinflüssen schützt und die einfach und sicher aufzubringen ist. Als wesentlichen Unterschied zu Emaillieren, Glasieren oder Sol-Gel-Verfahren sollen durch das erfindungsgemäße Verfahren keine nennenswerten Temperatureinflüsse auf den Basiswerkstoff ausgeübt werden. Die Anwendung der Beschichtung sollte keine aufwändigen Einrichtungen wie Brennöfen oder umweltbelastende Chemikalien erfordern und unabhängig vom Ort jederzeit angewendet werden können.

Das erfindungsgemäße Verfahren wird in den Ansprüchen detaillierter dargestellt.

Das erfindungsgemäße Verfahren geht von der Sol-Gel-Technik aus.

In der ersten Stufe wird auf die zu versiegelnden Oberflächen ein Sol-Gel-Lack aufgebracht.

Sol-Gel-Beschichtungen bestehen in der Regel aus zwei Reaktionskomponenten, die kurz vor der Verarbeitung in einem festen Verhältnis zueinander gemischt werden. Dieser Mischung wird als dritte Komponente eine Verdünnung, meist ein Alkohol, zugemischt, um die Konzentration der Reaktionsmischung und deren Viskosität einzustellen. Die Ausgangsverbindungen zur Bildung der Sole und schließlich des Sol-Gel-Lacks sind hydrolysierbare Siloxane der Formel SiR₄, wobei die 4 Reste R 2-4 hydrolysierbare Reste (OR') und 0-2 nicht hydrolysierbare Reste (R") umfassen.

Die hydrolysierbaren Reste OR' sind Hydroxy-, Alkoxy- und/oder Cycloalkoxyreste. Die nicht hydrolysierbaren Reste R", so sie vorhanden sind, sind Alkyl- und/oder Cycloalkylreste.

Die Ausgangsverbindungen der Sole können aus einer einzigen Art von Siloxan oder aus Gemischen mehrerer Siloxane bestehen. Für das erfindungsgemäße Verfahren werden bevorzugt Mischungen eingesetzt, die auch Tetramethoxysilan und Trimethoxymethylsilan enthalten. Andere Mischungen sind auch möglich und geeignet.

Im Sol sind die Ausgangsverbindungen zum Teil zu den entsprechenden Hydroxyverbindungen hydrolysiert, was durch die Zugabe eines Katalysators in Form von Säure begünstigt werden kann. Durch die hohe Neigung dieser Hydroxyverbindungen zur Kondensation können diese nun unter Abspaltung von Wasser zu kleineren Siloxannetzwerken kondensieren. In dem Sol liegen bereits kolloidale Partikel vor, die Siloxan-Bindungen enthalten. Siloxan-Bindungen sind Bindungen der Form ≡Si-O-Si≡, wobei "≡" drei voneinander unabhängige beliebige Bindungen mit anderen Elementen, insbesondere mit OH, OR' und R" symbolisiert, wodurch eine dreidimensionale vernetzte Struktur in den kolloidalen Partikeln entsteht.

Das Auftragen des Sol-Gel-Lacks kann auf jede beliebige Art und Weise erfolgen, etwa durch Sprühen, Tauchen, Streichen oder Fluten. Die Viskosität des Sol-Gel-Lacks kann vom Fachmann durch Zugabe von Lösemittel eingestellt werden auf die Anforderungen des zu beschichtenden Werkstoffs.

Nach dem Auftragen lässt man das aufgetragene Sol zu einem Gel reagieren. Diese Reaktion überführt das flüssige Sol in eine feste Gelschicht, in der sich die kolloidalen Partikel des Sols durch weitere Hydrolyse und Kondensation miteinander und mit noch nicht hydrolysierten und kondensierten Ausgangsverbindungen vernetzen. Dies geschieht beispielsweise durch Verdunsten des Lösemittels beim Trocknen.

Nach dem Stand der Technik würden die getrockneten Sol-Gel-Schichten nach dem Trocknen in einem Ofen eingebrannt bei Temperaturen von 150°C bis 400°C und einer Dauer von 20 bis 60 Minuten, um eine glaskeramische Struktur zu erzeugen.

Abweichend davon geht das erfindungsgemäße Verfahren einen anderen Weg:
Der Erfindung liegt die überraschende Erkenntnis zu Grunde, dass es möglich ist Sol-Gel-Schichten ohne Einbrennen direkt in reine Glasschichten umzuwandeln, die keine kristalline Strukturen oder organischen Reste enthalten. Diese Glasschichten sind homogen ohne Strukturen, porenfrei und sehr hart. Sie sind homogen mit dem Untergrund verbunden und lösen sich nicht ab.

Dazu ersetzt das erfindungsgemäße Verfahren in dem getrockneten Sol-Gel-Lack die Siloxan-Bindungen mit den organischen Resten R' und R" durch O-Si-O Bindungen, um ein homogenes, anorganisches, räumliches Netzwerk aus SiO₂ zu erzeugen. Dies ist nichts anderes als Glas.

Überraschend erwies sich als geeignetes Verfahren zur Erreichung des Ziels eine Behandlung des Sol-Gel-Lacks mit überhitztem Wasserdampf bei Temperaturen über 700°C. Die Eigenschaften von Wasser bzw. Wasserdampf weichen in diesem Temperaturbereich deutlich von den Eigenschaften von Wasser bei Normaltemperatur ab.

Die vorliegende Erfindung geht auf die Erkenntnis zurück, dass zur Ausbildung einer homogenen und stabilen Glasschicht (amorphes Glas), ausgehend von Sol-Gel-Lacken, eine kurzseitige (ab etwa 2 bis 4 Sekunden) Beaufschlagung bzw. Behandlung einer auf einem Substrat aufgebrachten Sol-Gel-Schicht mit einer Wasser-enthaltenden Atmosphäre bei einer Temperatur von oberhalb 700°C ausreicht. Die Anmelderin hat zudem festgestellt, dass eine rein thermische Behandlung solcher Oberflächen nicht zu den gewünschten stabilen Glasoberflächen führt. Dieser Unterschied lässt sich sehr wahrscheinlich darauf zurückführen, dass in dem angegebenen Temperaturbereich das Wasser mit den organischen Resten in den Siloxanstrukturen reagiert, und dabei zunächst einmal die organischen Reste in alkoholische Zwischenstufen umwandelt, die im weiteren Verlauf dann zu Kohlendioxid und Wasser abreagieren. Die verbleibenden Strukturen vernetzen dann in Gegenwart von Wasser zu einem homogenen Netzwerk aus (SiO₂)ₙ. Bei einer rein thermischen Behandlung der Sol-Gel-Lacke kann vermutlich auch eine Abspaltung und Zersetzung der organischen Reste aus der Sol-Gel-Schicht erreicht werden. Es wurde aber beobachtet, dass bei einer solchen Vorgehensweise ein (SiO₂)ₙ-Netzwerk nicht homogen ausgebildet wird, sondern stattdessen kristalline Bereiche entstehen, die schon mit dem bloßen Auge erkannt werden können. Im Endergebnis, und insbesondere bei weiterer thermischer Belastung der Oberfläche, ergeben sich Risse bis hin zum Zerfall der Schicht.

Bei den erfindungsgemäßen Beschichtungen konnte zudem überraschend festgestellt werden, dass sich nicht nur ein homogenes, amorphes Netzwerk eines Glases ausgebildet hatte, sondern dass die erhaltenen Glasbeschichtungen auch problemlos einer weiteren Temperaturbeaufschlagung unterworfen werden können. Dieser Umstand stellt eine besondere Vereinfachung des Verfahrens dar, da ja zunächst einmal eine kurzzeitige Behandlung mit dem überhitzten Wasserdampf notwendig ist, aber keinerlei weitergehende Einschränkung der Randbedingungen des Verfahrens. Anders ausgedrückt, das erfindungsgemäße Verfahren kann auch von relativ ungeübten Kräften umgesetzt werden, da bei einem Überschreiten der für die Ausbildung der amorphen Glasschicht erforderlichen Bedingungen hinsichtlich der Temperatur und des Vorhandenseins von Wasser keine weiteren Einschränkungen grundsätzlich zu beachten sind. Allerdings ergeben sich selbstverständlich Einschränkungen hinsichtlich der Behandlungsdauer der Schichten, wenn die unter der Glasschicht liegenden Substrate eine gewisse Temperaturempfindlichkeit aufweisen sollten.

Unter Temperaturempfindlichkeit wird in diesem Zusammenhang verstanden, dass das Substrat bei einer gewissen Temperatur, z. B. schmelzen und/oder reagieren kann.

Ein besonderer Vorteil des vorliegenden Verfahrens ist insbesondere darin zu sehen, dass die Zeitdauer bis zum Erhalt einer stabilen Glasschicht relativ kurz ist, so dass auch solche Substrate erfindungsgemäß mit einer Glasschicht beaufschlagt werden können, die normalerweise bei längerer Beaufschlagung mit den erfindungsgemäß eingesetzten Temperaturen einer chemischen und/oder physikalischen Umwandlung unterliegen würden.

Durch die Einwirkung von überhitztem Wasser werden die organischen Reste in den Siloxan-Bindungen angegriffen und umgewandelt in CH₃-OH (Methanol). In der nächsten Stufe kann eine Oxidation von CH₃-OH in CO₂ + H₂O erfolgen (Kohlendioxyd und Wasserdampf), die als Gas entweichen.

Bei der Behandlung des Sol-Gel-Lacks in Gegenwart von Wasser (beispielsweise überhitzter Wasserdampf) bei Temperaturen über 700°C laufen die oben beschriebenen Reaktionen spontan in Sekunden ab. Dabei ist es weder erforderlich noch wünschenswert den Sol-Gel-Lack selbst entsprechend hoch zu erhitzen. Als Ergebnis der Behandlung entsteht aus der ursprünglichen Sol-Gel-Schicht ein homogenes, räumliches Netzwerk aus SiO₂, was nichts anderes ist als Glas, vergleichbar zu Email. Dieses Netzwerk widersteht dauerhaft Temperaturbelastungen bis ca. 1100°C und chemischem Angriff.

Eine für die Durchführung des erfindungsgemäßen Verfahrens einsetzbare Wasserdampf-enthaltende Atmosphäre mit Temperaturen über 700°C findet sich beispielsweise im Abgasstrom von Gasflammen, die mit einem Überschuss an Sauerstoff betrieben werden. Bei der Verbrennung des Gases entstehen Wasserdampf und Kohlendioxyd. Die für das erfindungsgemäße Verfahren erforderlichen Temperaturen sind einfach einzustellen durch den Abstand der sichtbaren Flammenzone zu den zu versiegelnden Oberflächen.

Zur Durchführung der erfindungsgemäßen Versiegelung werden die zu versiegelnden Oberflächen zuerst von Verunreinigungen wie Fett, Lack, Korrosionsprodukten und losen Partikeln gesäubert.

Anschließend wird der Sol-Gel-Lack durch Spritzen, Streichen, Tauchen oder Fluten aufgetragen. Bei stark saugenden Untergründen kann der Auftrag in mehreren Schritten mit Zwischentrocknen an der Luft erfolgen, bis eine geschlossene Lackschicht erreicht ist. Sobald das Lösemittel verdunstet und die Schicht trocken ist, erfolgt als nächster Schritt die Umwandlung der Sol-Gel-Schicht in Glas.

Die Umwandlung der Sol-Gel-Schichten in Glas geschieht durch Behandeln der Oberflächen mit überhitztem Wasserdampf im Temperaturbereich von800°C bis 1100°C. Dies kann durch Beflammen der Oberflächen mit einer Gasflamme erfolgen, die mit Sauerstoffüberschuss betrieben wird.

Das Beflammen der beschichteten Oberflächen mittels einer mit Sauerstoff im Überschuss betriebenen Gasflamme ist eine sichere, einfache und wirtschaftliche Methode zur Herstellung der erfindungsgemäßen Versiegelung
Die Behandlungszeiten für das Beflammen liegen je nach Temperatur der Flamme, Abstand der Flamme zur Oberfläche und Dicke der Sol-Gel-Schicht im Bereich von 10 Sekunden bis ca. 60 Sekunden. Das Beflammen der Oberflächen kann auch in mehreren getrennten, zeitlich kürzeren Schritten erfolgen, um im Wesentlichen nur die Sol-Gel-Schicht zu erhitzen und eine zu starke Erwärmung des Basiswerkstoffes zu vermeiden. Das Beflammen kann beispielweise in mehreren kürzeren Teilschritten von z.B. 10 Sekunden oder 15 Sekunden erfolgen, die durch mehrminütige Abkühlzeiten getrennt sind.

Das erfindungsgemäße Verfahren ermöglicht es beinahe jeden festen Werkstoff mittels einer erfindungsgemäß hergestellten Glasschicht zu versiegeln.

Gegenstand der Erfindung sind somit auch solche Verbundwerkstoffe, bei denen ein unter Umständen temperaturempfindliches Substrat (wie oben beschrieben) mit einer dauerhaften Glasschicht überzogen wird. Die Erfindung ermöglicht gerade solche mit einer Glasschicht versehenen Verbundwerkstoffe, bei denen das unter der Glasschicht vorgesehene Substrat als temperaturempfindlich anzusehen ist. Temperaturempfindlich bedeutet in diesem Zusammenhang ganz allgemein, dass das Substrat beispielsweise bei einer Temperatur oberhalb von 100°C - oder auch oberhalb von 300°C, 400°C, 500°C, 600°C, 700°C - einer chemischen und/oder physikalischen Umwandlung unterliegen würde.

Da das erfindungsgemäße Verfahren aber so durchgeführt werden kann, dass das unter der späteren Glasschicht liegende Substrat nicht mit einer beeinträchtigenden Temperatur beaufschlagt wird, können jetzt auch gerade solche temperaturempfindlichen Substrate in einfacher Weise mit einer dauerhaften Glasschicht überzogen bzw. beschichtet werden.

Das erfindungsgemäße Verfahren ermöglicht weiterhin, dass relativ großflächige Glasbeschichtungen erhalten werden können. Hierfür gibt es im Stand der Technik keinerlei Vorbild. Möglich wird dieses Verfahrensergebnis insbesondere deshalb, weil man das Verfahren auch kleinflächig, d.h. beispielsweise mit einer einfachen Bunsenbrenner-Flamme, beginnen kann, und die gesamte Glasschicht erst nach und nach ausbildet. Dabei wirkt die zunächst aufgetragene Sol-Gel-Schicht u.a. auch als thermische Schutzschicht gegenüber dem darunter liegenden Substrat. Erfindungsgemäß werden somit insbesondere solche Glasschichten auf Substraten ermöglicht, die eine Ausdehnung von mindestens 2 cm² aufweisen.

Bei der Entwicklung der vorliegenden Erfindung sind die Erfinder u.a. auf die GB 2 257 439 A gestoßen, die die Herstellung glasartiger Beschichtungen, insbesondere für Zähne, beschreibt. In dieser Anmeldung wird die Umsetzung von Kieselsäure-Derivaten in Gegenwart eines Füllstoffs mit einer lokal einwirkenden Wärmequelle beschrieben. Die Wärmequelle, bei der es sich um einen Laserstrahl oder eine Butangasflamme handeln kann, bewirkt dann die Aushärtung der eingesetzten Zusammensetzung.

Die Verwendung einer punktuell wirkenden Wärmequelle ist essentiell für das in der GB 2 257 439 A vorgeschlagene Verfahren, da bei der Aushärtung der Beschichtungen eine Beeinträchtigung von Gewebestrukturen im Umfeld der Zähne unbedingt vermieden werden muss. In einem Ausführungsbeispiel wird u.a. beschrieben, dass eine glasähnliche Struktur erhalten werden kann, wenn die Sol-Gel-Beschichtung mit einer Butangasflamme beaufschlagt wird (Temperatur bei 1000°C). Offensichtlich muss man bei diesem Verfahren aber beachten, dass bei einer Beaufschlagung von mehr als 3 bis 6 Sekunden sofort eine Rissbildung auftritt (vgl. Seite 17, Zeilen 13 bis 16 dieser Anmeldung).

Eine Übertragung dieses Verfahrens auf großflächigere Substrate ist somit also weder vorgesehen noch scheint dies angesichts der beobachtenden Rissbildung möglich zu sein. Diese Anmeldung sieht nämlich vor, dass die Beaufschlagung der Flamme mit einer Geschwindigkeit von 6 bis 8 cm/s über 2 bis 4 Sekunden erfolgt. Ein solches "enges" Verfahrensfenster lässt sich großtechnisch, d.h. bei Oberflächen größer als 2 cm² und deutlich darüber, beispielsweise oberhalb 10 cm², nicht umsetzen. Offensichtlich kommt es bereits auf den kleineren Oberflächen zu einer erheblichen Rissbildung, die sich dadurch erklären lässt, dass die erhaltenen Glasschichten metastabil sind. Jedenfalls unterscheiden sich erfindungsgemäße Glasbeschichtungen davon deutlich dadurch, dass bei weiterer Temperaturbeaufschlagung (d.h. bei einem Überschreiten der in der GB 2 257 439 A angegebenen Randbedingungen von wenigen Sekunden) keine Rissbildung oder Ablösung der Beschichtung stattfindet.

Ohne an diese theoretische Vorstellung gebunden zu sein, gehen die Erfinder davon aus, dass sich dieser Unterschied wohl dadurch erklären lässt, dass bei dem erfindungsgemäßen Verfahren stets für eine ausreichende Wasseratmosphäre gesorgt wird. Mit dieser Kenntnis, die in der britischen Anmeldung offensichtlich noch nicht vorlag, ist es möglich, mittels einfacher Versuche für die jeweilige Wärmequelle die ausreichenden Verfahrensbedingungen festzulegen. Nach den bisherigen Versuchen der Anmelderin gelingt das erfindungsgemäße Verfahren aber regelmäßig, wenn sichergestellt ist, dass bei einer Temperatur oberhalb von 700°C, vorzugsweise 800°C bis 1100°C, gearbeitet wird, und dass (überhitzter) Wasserdampf vorliegt.

Der große technische und wirtschaftliche Vorteil des erfindungsgemäßen Verfahrens besteht darin, dass zu seiner Durchführung keine Öfen oder aufwändigen Vorrichtungen benötigt werden. Die zu versiegelnden Oberflächen werden bei der Behandlung nicht wesentlich erwärmt.

Das Aufsprühen des Sol-Gel-Lackes und das anschließende Beflammen der Oberflächen erfolgt weitgehend unabhängig von Form und Größe der zu versiegelnden Teile. Es kann praktisch an jedem Ort und auch an fest eingebauten Teilen erfolgen. Eine Reparatur beschädigter Oberflächen ist jederzeit leicht möglich, auch ohne die zu reparierenden Teile zu demontieren.

Die nach dem erfindungsgemäßen Verfahren hergestellten Glasschichten weisen je nach Intensität der Beschichtung Dicken zwischen 3µm auf glatten, nicht saugenden Untergründen und bis ca. 15µm auf porösen Untergründen auf. Sie sind fest mit dem jeweiligen Grundwerkstoff verankert und lösen sich auch bei Belastung nicht ab. Sie sind homogen, porenfrei und weitgehend kratzfest. Die Ritzhärte beträgt bei festem Untergrund über 1500g.

### Detaillierte Beschreibung der Erfindung

Die vorliegende Erfindung betrifft ein Verfahren zur Herstellung einer 1 µm bis 20 µm dicken Glasschicht mit einer Flächenausdehnung von größer als 2 cm² auf einem Substrat, umfassend die folgenden Schritte:
a) Aufbringen eines flüssigen Sols auf mindestens einer Oberfläche des Substrats; wobei das Sol in einem Lösemittel gelöste Siloxane der Formel Si(OR')_{4-n'} R"_{n'} mit n'=0,1 oder 2 umfasst, wobei jedes OR' unabhängig voneinander einen Hydroxy-, Alkoxy- und/oder Cycloalkoxy-Rest darstellt, und jedes R", soweit vorhanden, unabhängig voneinander einen Alkyl- und/oder Cycloalkyl-Rest darstellt;
b) Reagierenlassen des Sols zu einem Gel; und
c) Behandeln des Gels auf der mindestens einen Oberfläche außerhalb eines Ofens in einer Wasserdampf enthaltenden Atmosphäre bei einer Temperatur von mindestens 700°C in aufeinander folgenden Schritten, die jeweils eine Dauer von 5 bis 60 Sekunden haben, so dass es zu einer Ausbildung eines homogenen Netzwerks aus (SiO₂)ₙ kommt.

Die Verfahrensschritte a) und b) wurden bereits zuvor erläutert.

Bei dem kurzzeitigen Behandeln des Gels auf der mindestens einen Oberfläche kommt es darauf an, eine solche Temperatur kurzzeitig auf die Gel-Oberfläche aufzubringen, die zu einer Ausbildung einer im Wesentlichen aus Siliziumoxid bestehenden Glasschicht führt. Dabei ist insbesondere zu beachten, dass die Temperatur zunächst ausreichend hoch ist, mindestens 600°C, aber bevorzugt oberhalb von 700°C. Die Temperaturbehandlung soll aber kurzzeitig erfolgen, um insbesondere das sich unter der Gel-Schicht befindende Substrat nicht zu beeinträchtigen. Deswegen bietet es sich an bei empfindlicheren Substraten, die beispielsweise aus Holz bestehen können, diesen Vorgang mehrfach zu wiederholen.

Weitere Ausführungsformen der Erfindung werden in den abhängigen Ansprüchen angegeben.

Insbesondere hatte sich gezeigt, dass zur Durchführung des kurzzeitigen Behandelns des Sols auf der mindestens einen Oberfläche, ein überhitzter Wasserdampf eingesetzt werden kann. Dieser Wasserdampf sollte eine Temperatur von oberhalb 700°C aufweisen. Dieser Wasserdampf kann als Gemisch zusammen mit Sauerstoff und gegebenenfalls anderen Gasen vorliegen. Diese Behandlung dauert, bezogen auf die behandelte Fläche, jeweils etwa 5 bis 60 Sekunden, vorzugsweise 10 bis 60 Sekunden. Eine zwischengeschaltete Abkühlphase kann 60 Sekunden bis mehrere Minuten dauern.

Erfindungsgemäß beschichtete bzw. versiegelte Oberflächen sind
- undurchlässig für Wasser, Gase und Dämpfe
- elektrisch isolierend
- beständig gegen Salzwasser und Chemikalien mit Ausnahme von Fluoriden und stark alkalische Medien.
- leicht zu reinigen,
- lebensmittelecht,
- beständig gegen UV-Strahlen und Altern.
- nicht brennbar und widerstehen Temperaturen bis über 700°C.

Die Glasschichten zur Versiegelung von Oberflächen können bei Bedarf anorganische Pigmente in jeder beliebigen Farbe zugemischt werden zur Herstellung farbiger Oberflächen oder harte Partikel wie Aluminiumoxid oder Zirkonoxid, um die Verschleißfestigkeit der Versiegelung zu erhöhen.

### Beispiele

### Beispiel 1

Ein Edelstahlblech aus Werkstoff 1.4301 wurde trocken abgewischt und darauf ein Sol-Gel-Lack in zwei Durchgängen mittels Spritzpistole aufgetragen. Nach dem Trocknen wurde die Oberfläche für eine Gesamtdauer von 40 Sekunden beflammt in zwei Durchgängen von je 20 Sekunden, getrennt durch eine Abkühlphase von 10 Minuten.

Nach dem Abkühlen wies die Oberfläche eine geschlossene, porenfreie Glasschicht auf. Ein Ritztest ergab bei 1500g eine Riefe im Basismaterial, ohne dass die Glasschicht verletzt war.

### Beispiel 2

Ein unglasierter Keramikteller wurde mittels Spritzpistole in zwei Durchgängen mit Sol-Gel-Lack beschichtet und in drei Schritten zu je 20 Sekunden beflammt. Die Oberfläche wies nach dem Abkühlen eine glatte, geschlossene, glasurähnliche Oberfläche auf. Die Oberfläche war wasserdicht und leicht zu reinigen.

### Beispiel 3

Ein Betonstein mit unbehandelter Oberfläche wurde durch trockenes Abwischen gesäubert und anschließend mittels Spritzpistole in drei Durchgängen mit Sol-Gel-Lack beschichtet. Nach dem Trocknen wurde die Oberfläche in drei Durchgängen zu je 20 Sekunden beflammt. Nach dem Abkühlen wies die Oberfläche eine harte, geschlossene, transparente und leicht glänzende Schicht auf. Die Oberfläche war wasserdicht und leicht zu reinigen.

## Patentansprüche

1. Verfahren zur Herstellung einer 1 µm bis 20 µm dicken Glasschicht mit einer Flächenausdehnung von größer als 2 cm² auf einem Substrat, umfassend die folgenden Schritte:
a) Aufbringen eines flüssigen Sols auf mindestens einer Oberfläche des Substrats, wobei das Sol in einem Lösemittel gelöste Siloxane der Formel Si(OR')_{4-n'} R"_{n'} mit n'=0,1 oder 2 umfasst, wobei jedes OR' unabhängig voneinander einen Hydroxy-, Alkoxy- und/oder Cycloalkoxy-Rest darstellt, und jedes R", soweit vorhanden, unabhängig voneinander einen Alkyl- und/oder Cycloalkyl-Rest darstellt;
b) Reagierenlassen des Sols zu einem Gel und
c) Behandeln des Gels auf der mindestens einen Oberfläche außerhalb eines Ofens in einer Wasser-enthaltenden Atmosphäre bei einer Temperatur von mindestens 700°C in aufeinander folgenden Schritten, die jeweils eine Dauer von 5 bis 60 Sekunden haben, so dass es zu einer Ausbildung eines homogenen Netzwerks aus (SiO₂)ₙ kommt.

2. Verfahren gemäß Anspruch 1, wobei das Sol weiterhin ein oder mehrere Elemente aus der Gruppe bestehend aus Al, Ti, Cr, Mg, Ca und Zn umfasst.

## Claims

1. A process for producing a crack-free glass layer of thickness 1 µm to 20 µm and having an areal extent of greater than 2 cm² on a substrate, comprising the following steps:
a) applying a liquid sol to at least one surface of the substrate, wherein the sol comprises, dissolved in a solvent, siloxanes of the formula Si(OR')_{4-n'}R"_{n'} with n' = 0, 1 or 2, where each OR' is independently a hydroxyl, alkoxy and/or cycloalkoxy radical, and each R", where present, is independently an alkyl and/or cycloalkyl radical;
b) leaving the sol to react to form a gel; and
c) treating the gel on the at least one surface outside an oven in the presence of a water containing atmosphere at a temperature of at least 700°C in successive steps each having a duration of 5 to 60 seconds so as to form a homogeneous network of (SiO₂)ₙ.

2. The process as claimed in claim 1, wherein the sol further comprises one or more elements from the group consisting of Al, Ti, Cr, Mg, Ca and Zn.

## Revendications

1. Procédé de formation d'une couche de verre de 1 µm à 20 µm d'épaisseur ayant une extension de surface supérieure à 2 cm² sur un substrat, comprenant les étapes suivantes consistant à :
a) appliquer un sol liquide sur au moins une surface du substrat, le sol comprenant des siloxanes dissous dans un solvant et de formule Si(OR')_{4-n'}R"_{n'}, avec n' = 0,1 ou 2, chaque OR' représentant indépendamment un radical hydroxy, alcoxy et/ou cycloalkoxy, et chaque R", si présent, représentant indépendamment un radical alkyle et/ou cycloalkyle ;
b) laisser le sol réagir pour former un gel et
c) traiter le gel sur ladite au moins une surface à l'extérieur d'un four dans une atmosphère contenant de l'eau à une température d'au moins 700 °C en étapes successives ayant chacune une durée de 5 à 60 secondes de manière à former un réseau homogène de (SiO₂)ₙ.

2. Procédé selon la revendication 1, dans lequel le sol comprend en outre un ou plusieurs éléments choisis dans le groupe constitué par Al, Ti, Cr, Mg, Ca et Zn.
